# EUROPEAN PATENT SPECIFICATION

(11) **EP 2 440 711 B1**
(45) Date of publication and mention of the grant of the patent: **30.04.2014**
(21) Application number: 10725852.7
(22) Date of filing: 17.05.2010
(51) Int. Cl.: E02F 3/627, A01D 87/00, B62D 49/00, B62D 49/02

(54) **AGRICULTURAL TRACTOR WITH FRONT LOADER**
TRAKTOR FÜR DIE LANDWIRTSCHAFT MIT EINEM FRONTLADER
TRACTEUR AGRICOLE AVEC CHARGEUR FRONTAL

(30) Priority: 11.06.2009 GB 0909986
(43) Date of publication of application: 18.04.2012
(73) Proprietor: AGCO SA, 60026 Beauvais (FR)
(72) Inventor: HUSSON, Geoffroy, 60000 Beauvais (FR); DUPRIE, Pierre, 59440 Doulers (FR)
(74) Representative: Marden, David Ian
(86) International application number: PCT/IB2010/001128
(87) International publication number: WO 2010/143037

(56) References cited:
- WO-A1-2008/070901
- FR-A1- 2 567 092
- GB-A- 888 558
- US-A- 3 766 952

## Description

The invention relates to detachable front loaders for attachment to agricultural tractors having an engine compartment disposed forwardly of a cab and transversely centred on a longitudinal axis.

For many decades front loaders have been fitted to agricultural tractors for the handling of bulk material such as grain, muck, silage and hay. Typically, front loaders are equipped to host attachments of various types such as grain buckets and forks to cater for the different tasks faced. GB-888.558 discloses a front loader for an agricultural tractor having a pair of lift arms pivotally mounted with respect to the tractor and disposed on either side of an engine compartment. This document forms the basis for the preamble of the independent claim.
The height range at which a traditional tractor front loader can reach is limited by the length of the lift arms which support the attachment. In recent years some larger farm businesses have invested in dedicated telehandlers which include a telescopic boom for achieving greater heights, thus allowing the farmer to form higher bale stacks for example. Furthermore, the telehandler carries the advantage of requiring a smaller engine thus saving fuel.

Although suitable for the larger farmer, telehandlers are dedicated vehicles which require a large investment and spend a large proportion of their time not being used. This presents smaller farms with a limitation on the equipment which they can use due to limited funds available.

FR-2,567,092 discloses a combined tractor and excavator vehicle having an articulated chassis and a telescopic boom pivotally mounted to a front portion of the chassis at a location above an engine compartment and in front of the driver.

It is an object of the present invention to provide an agricultural tractor with a front loader that meets the needs of smaller farmers.

In accordance with the invention there is provided an agricultural tractor with a front loader, the tractor having an engine compartment disposed forwardly of a cab and transversely centred on a longitudinal axis, the front loader being detachable from the tractor and comprising a pair of lift arms, when in use, each being pivotally mounted relative to the tractor at respective pivot points which are transversely spaced either side of the engine compartment, the lift arms, when lowered, extending generally forwardly and converging in front of the engine compartment to attach to a single, transversely centred telescopic boom which is disposed in front of the engine compartment when lowered.

By providing a detachable front loader for a tractor which carries a telescopic boom the functionality of a standard tractor is increased and greater loader reaches can be achieved without dedicated vehicles. The purchase of an additional front loader is cheaper than the purchase of a dedicated telehandler.

The invention involves the recognition that farmers are turning to telehandlers to increase productivity due to the increased load capacity. A large tractor of say around 150hp can accommodate a larger loader and a larger attachment. However this does not necessarily improve the productivity because the weight of the larger attachment required often negates the increase in loader capacity. By incorporating a telescopic boom onto a conventional front loader for a tractor, the farmer can improve productivity without the requirement to purchase a dedicated vehicle.

The use if two lift arms permits the installation of a telescopic boom on a tractor with minimal changes to the traditional front loader structure thus saving manufacturing costs. Advantageously, when in the lifted position the driver is able to obtain an uninterrupted view in the forward direction through a window which is framed by the raised lift arms.

The pivot points are preferably located forwardly of the cab and rearward of a front axle. Advantageously, this reduces any displacement to the centre of mass of the tractor when the front loader is in a raised position.

Preferably, the telescopic boom comprises an outer boom element which is secured to the lift arms by welding. Furthermore, an inner boom element slidably extends from within the outer boom element and attachment mounting means are provided and disposed on the forward most end of the inner boom element for pivotally mounting a front loader attachment such as a bucket.

The front loader may further comprise a hydraulic lift ram associated with each respective lift arm, wherein each lift ram is connected between the associated lift arm and a point fixed relative to the tractor. Advantageously, the lift rams are outside of the field of view for the driver when operating the front loader at extended heights. This is a significant improvement over the traditional arrangement of a dedicated telehandler in which the lift rams are disposed underneath and aligned with the single boom thus obscuring the driver's field of vision.

In a preferred arrangement each lift ram is pivotally connected to the associated lift arm by a pin which extends transversely and is held between the associated lift arm and the telescopic boom. The pin exploits the structural stability provided by the gap which exists between the converging lift arms and the telescopic boom to provide an anchorage point upon which the lift rams can pivot and apply lifting force.

The provision of lift rams on either side of the engine compartment allows the lift arms to at least partially shield the view of the respective lift rams when viewed from the side. In addition to being aesthetically pleasing, this arrangement minimizes the obscuring of the driver's view during operation.

Each lift arm may be cast so as to be formed from a single continuous piece of metal. Alternatively, each lift arm may be formed from a single metal plate which is bent to form a converging profile in the forward direction. Advantageously, this allows the profile of the front loader to be tailored to hug the profile of the tractor engine compartment and particularly the hood. In turn, this minimizes the reduction in turning radius created by the interception of the angled front wheels with the loader frame.

Preferably, the front loader is arranged to cooperate with a stand which supports the front loader when detached from the tractor. Preferably further still, the front loader includes an integrated stand.

Further advantages of the invention will become apparent from the following description of a specific embodiment with reference to the appended drawings in which:-
- Figure 1: is a perspective view of a tractor having a front loader fitter thereto in accordance with the invention;
- Figure 2: is a side view of the tractor of Figure 1;
- Figure 3: is a perspective view of the tractor of Figure 1 shown with the loader removed;
- Figure 4: is a side view of the tractor of Figure 1 shown with the loader removed;
- Figure 5: is a perspective view of the front loader of Figure 1 shown with the loader attachment frame front axle and engine package of the tractor;
- Figure 6: is a side view of the front loader of Figure 5;
- Figure 7: is a perspective view of the front loader of Figure 5 shown in a raised position;
- Figure 8: is a side view of the front loader of Figure 7;
- Figure 9: is a front view of the loader of Figure 7; and,
- Figure 10: is a side view of a front loader in accordance with the invention showing the positions of the hydraulic rams involved.

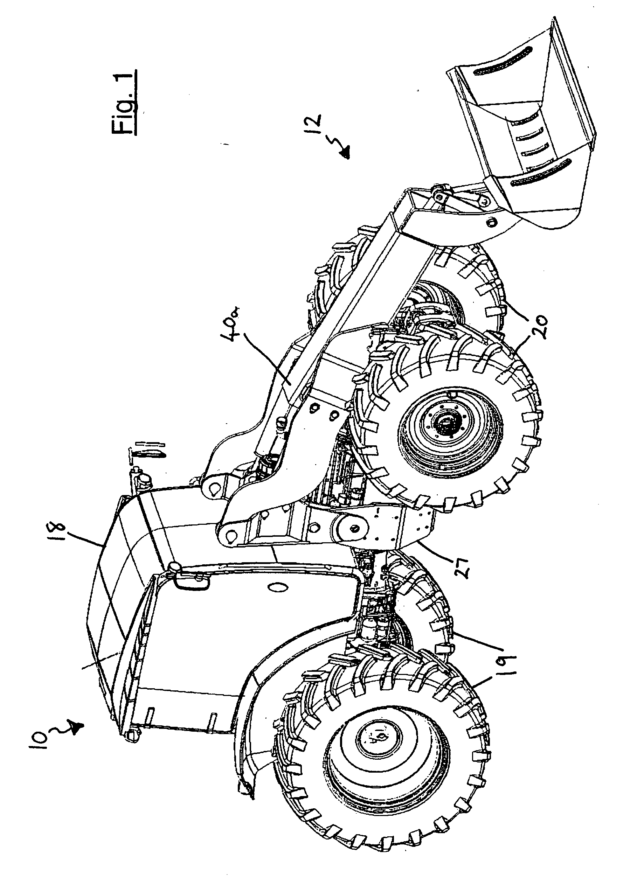

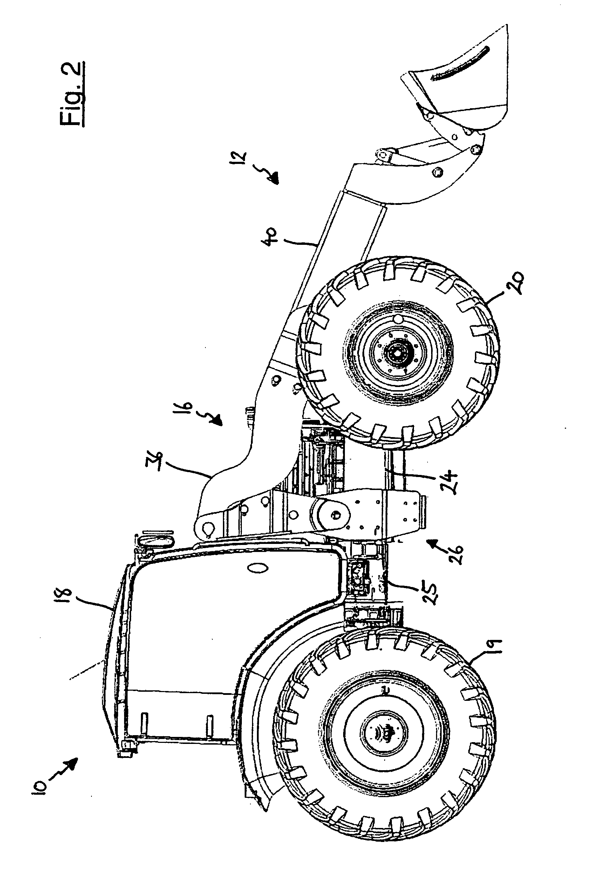

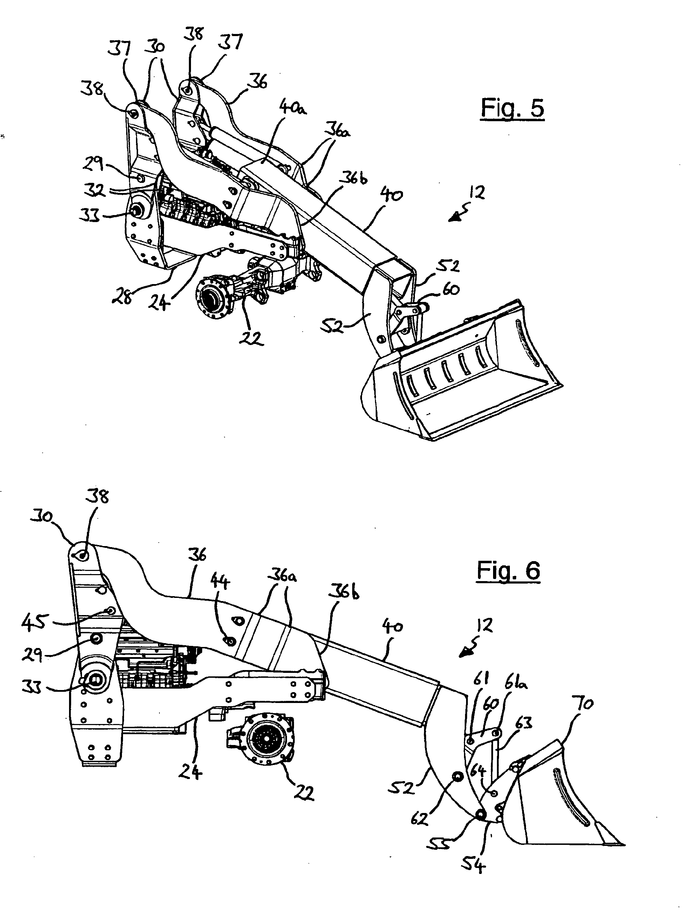

With reference to Figures 1 and 2, a tractor 10 (shown with the engine cover hood removed) has attached thereto a front loader 12. The tractor 10 comprises an engine 14 housed within an engine compartment designated generally at 16 which is disposed forwardly of a cab 18 and transversely centred on a longitudinal axis. It should be understood that the term 'forwardly', 'transversely', and 'longitudinal' are used in relation to the normal forward direction of the tractor wherein 'transversely' refers to left and right and 'longitudinal' refers to fore and aft. For completeness, the tractor 10 further comprises a pair of rear wheels 19 and a pair of front wheels 20, the latter being steerable so as to direct the tractor. The front wheels 20 are mounted on respective ends of a front axle 22 (Figures 5 to 9) which is mounted to a tractor frame 24 which is secured to a transaxle 25 and together provide a chassis.

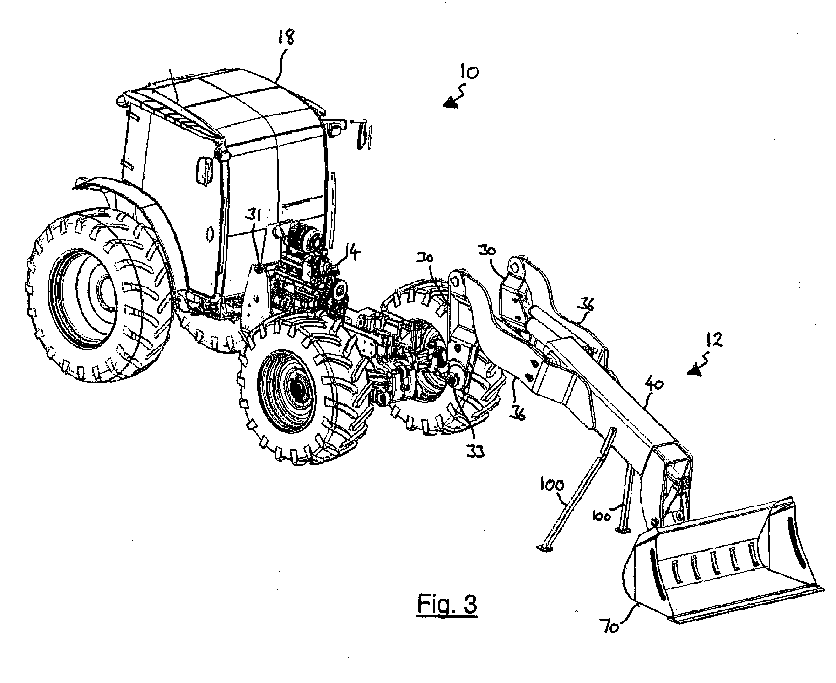

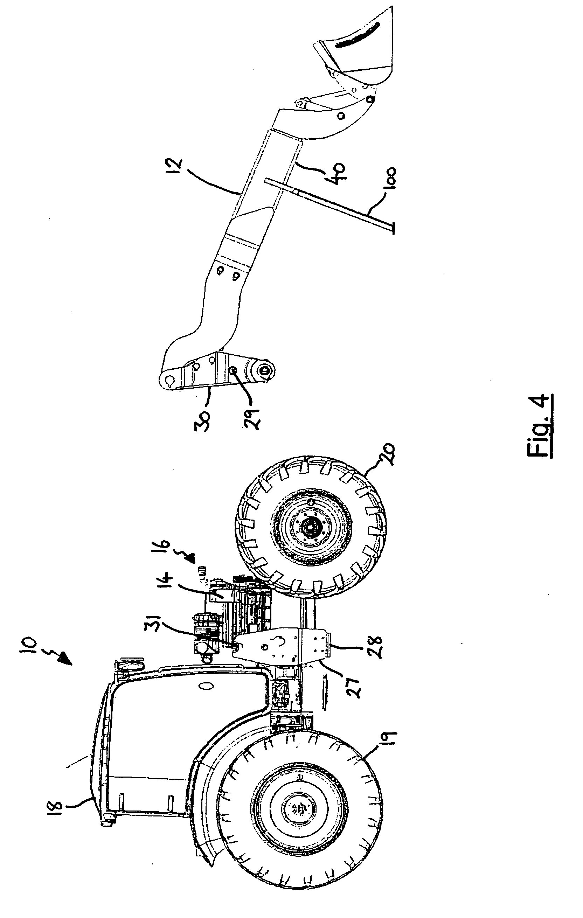

When detached from the tractor 10, loader 12 is supported on the ground by stand members 100 as shown in Figures 3 and 4. The stand members 100 provide a stand which may be detachable from the loader 12 when attached to the tractor 10. Alternatively, the stand may be integrated onto the loader structure and have a stowed position when attached to the tractor so not to interfere with operation of the loader 12. Any stand may be mounted to any practical part of the loader 12 so as to allow freestanding thereof when detached from the tractor, albeit in a position which allows easy attachment as described below.

A loader attachment frame, designated generally at 26, includes a pair of upright support members 27 each disposed on a respective side of the frame 24, connected by a lower, transverse, support member 28 which is secured to the frame 24 by bolts or other suitable attachment means. The loader attachment frame 26 provides a means for attaching the loader 12 to the tractor.

With particular reference to Figures 4, 5 and 6, the loader 12 is secured to the loader attachment frame 26 by two pins on each side. Firstly a load bearing pin 29, which is permanently secured to upright members 30 of the loader 12, are received in fork elements 31 disposed on the upper edge of upright support members 27.

With reference to Figures 3 and 4, when attaching the loader 12 a driver simply directs the tractor 10 between the upright members 30 so as to align the load bearing pins 29 above the fork element 31 on each side. Subsequently, the hydraulic pipes (not shown) are attached between the loader 12 and tractor 10 to allow the upright member 30 to be lowered thus engaging the load bearing pin 29 with the receiving fork elements 31. Each upright member 30 comprises a longitudinal aligned and downwardly extending jaw formed from parallel plates 32 wherein each jaw receives an upper portion of a respective upright support member 27. When in position, the operator simply inserts fixing pins 33 so as to secure the load bearing pins 29 in the fork elements 31 and prevent fore and aft movement of the upright members 30. The stand 100 is then either removed or folded into a stowed position (not shown).

From the above description of the attachment process it can be seen that the loader 12 can be simply attached and detached in a similar manner to existing front loaders and therefore additional training is not required.

Turning now to the components of loader 12, with reference to Figures 5 and 6, a pair of lift arms 36 are each pivotally mounted at one end within a jaw 37 integrated into a respective upright member 30 and secured in position by a pin 38. The pivotal attachment allows the lift arm to be raised and lowered within a range determined by the lift rams (to be described below). The lift arms 36 are transversely spaced either side of the engine compartment 16 and, as shown in Figures 5 and 6, extend generally forwardly and converge in front of the engine compartment 16 to attach to a telescopic boom 40.

The lift arms 36 are cast to provide a single continuous piece of steel plate which is angled at angled regions 36a to form a converging profile in the forward direction whilst conforming with the profile of telescopic boom 40 to allow secure attachment thereto. The telescopic boom 40 is held between the lift arms 36 by welding at a front region 36b of the lift arms 36 the rear most end 40a of the telescopic boom 40 lies in front the engine compartment 16 when in the lowered position shown in Figures 1, 2, 5 and 6. This enables the telescopic boom 40 to be lowered to the ground without coinciding with the profile of the engine compartment 16.

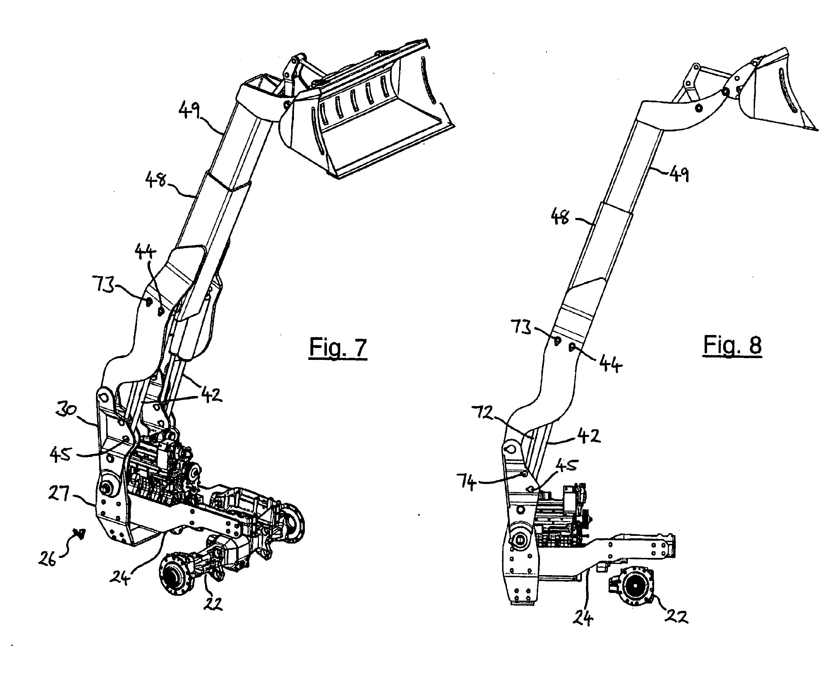

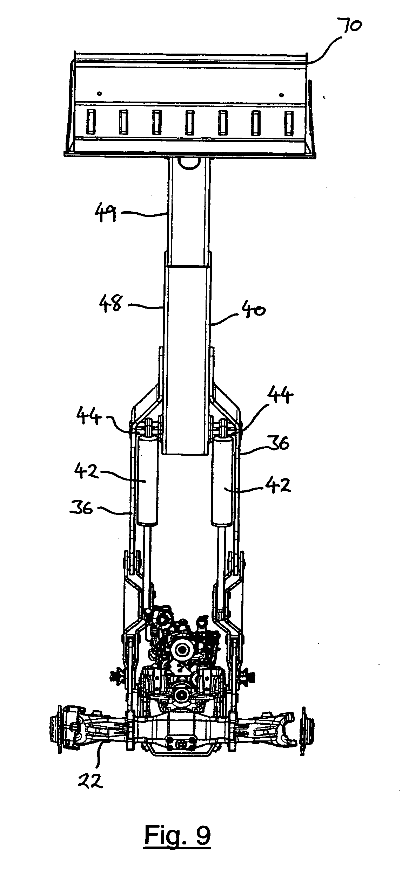

A pair of hydraulic lift rams 42 are provided on respective sides of the loader 12 and each being associated with a respective lift arm 36. Each lift ram 42 includes a hydraulically actuated cylinder and piston of known construction and is connected between the associated lift arm 36 by pin 44 and the upright member 30 by pin 45 (see Figure 8). Pin 44 extends transversely and is held between the associated lift arm 36 and the telescopic boom 40 as shown in Figure 9. In a similar manner, pin 45 is held between the parallel plates 32 of upright member 30. Extension of the pair of lift rams 42 forces lifting of the lift arms 36 and telescopic boom 40. Application of the fluid pressure required to operate the lift rams 42 is controlled from within the cab 18 as for traditional front loaders.

The telescopic boom 40 comprises an outer boom element 48 which is secured to the lift arms 36, and an inner boom element 49 which slidably extends from within the outer boom element. Although shown with a square profile, it is envisaged that the cross section of the boom elements 48,49 may adopt alternative shapes such as circular or otherwise.

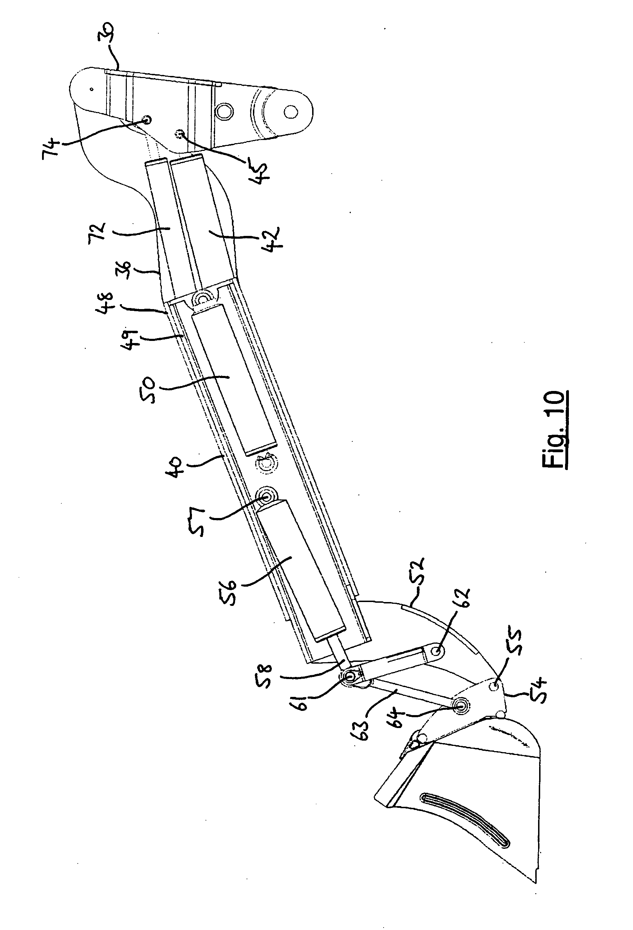

With reference to Figure 10, an extension cylinder 50 is enclosed with in the telescopic boom 40. The extension cylinder 50 is again hydraulically actuated and connected at one end to the outer boom element 48 and, at the other end, to the inner boom element 49. Selective application of hydraulic pressure to the extension cylinder causes extension and retraction of the inner boom element 49 from within the outer boom element 48 as per known telescopic booms provided on telehandlers.

At the extreme end of inner boom element 49 a pair of parallel plates 52 are welded to provide a bracket. The plates 52 hold at their end remote the boom 40 an attachment pivot element 54 which is secured by a pin 55 allowing pivotal movement of the attachment pivot element 54 relative to the plates 52 around a transverse axis defined by the pin 55. Pivoting movement of attachment bracket 54 is controlled by a dump ram 56 which is secured at one end within the inner boom element 49 at attachment point 57 (Figure 10). The piston 58 of dump ram 56 is pivotally connected to an intermediate link 60 by a pin 61, the intermediate link 60 being pivotally attached to bracket 52 by pin 62.

For the arrangement shown in Figure 10, pin 61 also secures one end of a rod 63 which is connected at its other end to attachment element 54 by pin 64. It should be appreciated that the arrangement shown in Figure 10 differs to that shown in Figures 1 to 9 and that the latter arrangement includes a separate pin 61a to hold rod 63 relative to link 60.

Various attachments, including the bucket 70 shown in the Figures, can be mounted to the attachment mounting bracket 54 by known mechanisms.

A pair of compensation rams 72 are each located in parallel to a respective lift ram 42 and are pivotally connected to the lift arms 36 and upright member 30 by pins 73 and 74 respectively. The compensation cylinders 72 are each connected to the dump cylinder 56 and serve to provide a levelling function in a known manner with which the tilt angle of attachment 70 is maintained as the lift arms 36 are raised and lowered. The levelling principle is well known and will not be described any further.

Although the telescopic boom 40 described comprises two boom elements, it is envisaged that three or more nested boom elements may be employed in the same manner without deviating from the scope of the invention.

By providing a front loader having a telescopic boom wherein the front loader is simply detachable by a quick release mechanism as described, the versatility of a tractor can be increased in addition to delivering improved productivity. It will be appreciated that no significant modifications are required to the tractor in order to host the front loader in accordance with the invention thus making the described front loader a favourable alternative to purchasing a dedicated telehandler vehicle.

## Claims

1. An agricultural tractor (10) including a front loader (12) the agricultural tractor (10) having an engine compartment (16) disposed forwardly of a cab (18) and transversely centred on a longitudinal axis, the front loader (12) being detachable from the tractor (10) and comprising a pair of lift arms (36), when in use, each being pivotally mounted rotative to the tractor (10) at respective pivot points which are transversely spaced either side of the engine compartment (16), **characterised in that** the lift arms (36), when lowered, extend generally forwardly and converging in front of the engine compartment (16) to attach to a single, transversely centred telescopic boom (40) which is disposed in front of the engine compartment.

2. The agricultural tractor according to Claim 1, wherein the pivot points are located forwardly of the cab (18) and rearward of a front axle (22).

3. The agricultural tractor according to Claim 1 or 2, wherein the telescopic boom (40) comprises an outer boom element (48) which is secured to the lift arms (36), an inner boom element (49) which slideably extends from within the outer boom element (48), and attachment mounting means (54) disposed on the forward most end of the inner boom element (49) for pivotally mounting a front loader attachment (70).

4. The agricultural tractor according to any preceding claim, further comprising a hydraulic lift ram (42) associated with each respective lift arm (36), wherein each lift ram (42) is connected between the associated lift arm and a point fixed relative to the tractor.

5. The agricultural tractor according to Claim 4, wherein each lift ram is pivotally connected to the associated lift arm by a pin (44) which extends transversely and is held between the associated lift arm (36) and the telescopic boom (40).

6. The agricultural tractor according to Claim 4 or 5, wherein each lift ram (42) is at least partially shielded from view by the associated lift arm (36) when viewed from the side.

7. The agricultural tractor according to any preceding claim, wherein each lift arm is cast.

8. The agricultural tractor according to any preceding claim, which is arranged to cooperate with a stand (100) which supports the front loader (12) when detached from the tractor (10).

9. The agricultural tractor according to Claim 8, further comprising an integrated stand which is moveable between a stowed position and an operable position.

## Patentansprüche

1. Landwirtschaftliche Zugmaschine oder Traktor (10) mit einem Frontlader (12), wobei die landwirtschaftliche Zugmaschine oder der Traktor (10) einen Motorraum (16) aufweist, der vor einer Fahrerkabine (18) angeordnet ist und quer zu einer Längsachse zentriert ist, wobei der Frontlader (12) von der Zugmaschine (10) abnehmbar ist und ein Paar von Hubarmen (36) aufweist, die im Betrieb jeweils relativ zu der Zugmaschine oder dem Traktor (10) verschwenkbar an jeweiligen Schwenkpunkten montiert sind, welche transversal beiderseits des Motorraums (16) beabstandet sind, **dadurch gekennzeichnet, dass** sich die Hubarme (36), wenn sie abgesenkt sind, im Wesentlichen nach vorne und vor dem Motorraum (16) zusammenlaufend erstrecken für eine Befestigung an einem einzigen transversal zentrierten Teleskopausleger (40), der vor dem Motorraum angeordnet ist.

2. Landwirtschaftliche Zugmaschine oder Traktor nach Anspruch 1, wobei die Schwenkpunkte vor der Fahrerkabine (18) und hinter einer Vorderachse (22) angeordnet sind.

3. Landwirtschaftliche Zugmaschine oder Traktor nach Anspruch 1 oder 2, wobei der Teleskopausleger (40) ein äußeres Auslegerelement (48), das an den Hubarmen (36) befestigt ist, ein inneres Auslegerelement (49), das sich verschiebbar oder gleitend aus dem Inneren des äußeren Auslegerelements (48) erstreckt, und mindestens ein Anbaubefestigungsmittel (54) zum verschwenkbaren Befestigen eines Frontladeranbauteils (70), das an dem vordersten Ende des inneren Auslegerelements (49) angeordnet ist, aufweist.

4. Landwirtschaftliche Zugmaschine oder Traktor nach einem der vorhergehenden Ansprüche, die oder der einen zu dem jeweiligen Hubarm (36) gehörigen hydraulischen Hubkolben (42) aufweist, wobei jeder Hubkolben (42) zwischen dem zugehörigen Hubarm und einem relativ zu der Zugmaschine festen Punkt verbunden oder angeordnet ist.

5. Landwirtschaftliche Zugmaschine oder Traktor nach Anspruch 4, wobei jeder Hubkolben über einen Stift oder Bolzen (44), der sich transversal erstreckt und zwischen dem zugehörigen Hubarm (36) und dem Teleskopausleger (40) gehalten oder aufgenommen ist, mit dem zugehörigen Hubarm verschwenkbar verbunden ist.

6. Landwirtschaftliche Zugmaschine oder Traktor nach Anspruch 4 oder 5, wobei jeder Hubkolben (42) von der Seite aus gesehen zumindest teilweise durch den zugehörigen Hubarm (36) sichtgeschützt ist.

7. Landwirtschaftliche Zugmaschine oder Traktor nach einem der vorhergehenden Ansprüche, wobei jeder Hubarm gegossen ist.

8. Landwirtschaftliche Zugmaschine oder Traktor nach einem der vorhergehenden Ansprüche, die oder der geeignet eingerichtet ist, um mit einem Ständer (100), der den Frontlader (12) abstützt, wenn dieser von der Zugmaschine (10) abgenommen ist oder wird, zusammenzuarbeiten.

9. Landwirtschaftliche Zugmaschine oder Traktor nach Anspruch 8, die oder der einen integrierten Ständer aufweist, der zwischen einer verstauten Stellung und einer Betriebsstellung bewegbar ist.

## Revendications

1. Tracteur agricole (10) comportant un chargeur frontal (12), le tracteur agricole (10) comprenant un compartiment moteur (16) disposé à l'avant d'une cabine (18) et centré transversalement sur un axe longitudinal, le chargeur frontal (12) pouvant être séparé du tracteur (10) et comprenant une paire de bras de levage (36), en cours d'utilisation, chacun étant monté de manière à pouvoir pivoter par rapport au tracteur (10) au niveau de points de pivot respectifs qui sont espacés transversalement de chaque côté du compartiment moteur (16), **caractérisé en ce que** les bras de levage (36), lorsqu'ils sont abaissés, s'étendent sensiblement vers l'avant et convergent sur l'avant du compartiment moteur (16) afin de fixer une simple flèche télescopique centrée transversalement (40) qui est disposée sur l'avant du compartiment moteur.

2. Tracteur agricole selon la revendication 1, dans lequel les points de pivot sont situés à l'avant de la cabine (18) et à l'arrière d'un essieu avant (22).

3. Tracteur agricole selon la revendication 1 ou 2, dans lequel la flèche télescopique (40) comprend un élément de flèche externe (48) qui est fixé sur les bras de levage (36), un élément de flèche interne (49) qui s'étend de manière à pouvoir coulisser depuis l'intérieur de l'élément de flèche externe (48), et des moyens de montage d'attelage (54) disposés à l'extrémité la plus avant de l'élément de flèche interne (49) afin d'assurer le montage avec possibilité de pivotement d'un attelage de chargeur frontal (70).

4. Tracteur agricole selon l'une quelconque des revendications précédentes, comprenant en outre un vérin de levage hydraulique (42) associé à chaque bras de levage respectif (36), dans lequel chaque bras de levage (42) est raccordé entre le bras de levage associé et un point fixe par rapport au tracteur.

5. Tracteur agricole selon la revendication 4, dans lequel chaque vérin de levage est raccordé avec possibilité de pivotement au bras de levage associé par une broche (44) qui s'étend transversalement et est maintenue entre le bras de levage associé (36) et la flèche télescopique (40).

6. Tracteur agricole selon la revendication 4 ou 5, dans lequel chaque vérin de levage (42) est au moins partiellement protégé de la vue par le bras de levage associé (36) lorsqu'il est vu depuis le côté.

7. Tracteur agricole selon l'une quelconque des revendications précédentes, dans lequel chaque bras de levage est moulé.

8. Tracteur agricole selon l'une quelconque des revendications précédentes, qui est agencé de manière à coopérer avec un support (100) qui maintient le chargeur frontal (12) lorsqu'il est séparé du tracteur (10).

9. Tracteur agricole selon la revendication 8, comprenant en outre un support intégré qui peut être transformé entre une position repliée et une position opérationnelle.
